Europäisches Patentamt

European Patent Office

Office européen des brevets

(11) Publication number: **0 488 452 A2**

## EUROPEAN PATENT APPLICATION

(21) Application number: **91203047.5**

(22) Date of filing: **21.11.91**

(51) Int. Cl.⁵: **B32B 15/08**, B32B 27/36, B32B 27/32, B65D 77/20

(30) Priority: **29.11.90 IT 222290**

(43) Date of publication of application:
**03.06.92 Bulletin 92/23**

(84) Designated Contracting States:
**BE CH DE DK ES FR GB LI NL SE**

(71) Applicant: **SAFTA S.P.A.**
**Via Arda 11**
**I-29100 Piacenza(IT)**

(72) Inventor: **Navarini, Franco, Dr.**
**Via Manfredi 122/B**
**I-29100 Piacenza(IT)**

(74) Representative: **Incollingo, Italo**
**Piazzale Lavater, 3**
**I-20129 Milano(IT)**

(54) Multilayer composite material, in particular multilayer thermoplastic film, and relevant formed articles.

(57) A multilayer composite, thermoplastic and thermosealable material, in particular a multilayer printable film is described, which consists f.i. of eight layers and is able to be fixed to formed bodies with detachement resistance gradients.

Fig. 1

EP 0 488 452 A2

The present invention relates to a multilayer composite material, in particular a thermoplastic and thermosealable film.

In one of its embodiments the invention concerns a film or foil to form covers fixed on container rims with detachment resistance gradients.

Known is the wide use of containers, generally not big for istance for single-portion of substances, in particular of eatable mainly liquids, creams and the like.

Up to now these containers are formed with a top rim along which the cover is heat sealed. Generally the only care of ensuring to the content a nearly absolute protection leads to the use of an extremely resistant sealing seam of the cover to the container. The cover detachment takes then place under several difficulties and offen requires a good effort. This breakaway is difficultly controllable in the sense that f.i. once it has initiated at one end it extends quickly and out of comand on the whole open surface of the container causing also possible outwards splashings. Further after the partial or total opening the container cannot be closed, i.e. the cover is already out of use (besides under said effort the cover foil generally goes torn, broken, divided in several no more utilizable pieces).

To avoid these inconveniences easy-open covers have been made, however the sealing and the content protection are aleatory. The impossibility of reusing the cover and of taking out only a part of the content remains.

First object of the present invention is to provide a composite multilayer material, in particular a multilayer foil which allows the elimination of, among others, the above mentioned inconveniences and the realization of coverings, closings, overlaps and the like with detachment controllable resistances.

An other object of the invention is a multilayer film which is adapted to be fastened to other bodies with disjunction resistance gradients.

The present invention covers also: a simple method to manufacture said multilayer material; the formed articles obtained from the application of the relevant multilayer films.

These and other objects are reached with the material according to the invention which is characterized in that it comprises, proceding from the outside to the inside;

a) a layer of bright protective varnish VER(1) on a polyester or polyurethanes basis, which two components and a thickness of from 0,5 to 5gr/m²;

b) a printing ink layer INK(2) on a nitrocellulose basis having a thickness increasing with the colour number increase from 2,5 to 7gr/m², preferably around 3gr/m² for a standard colours number;

c) a layer of diluting, pigment free primer PRIMER(3) on a nitrocellulose basis with a thickness of from 0,5 to 1,5gr/m²;

d) an aluminum foil Al(4) with a thickness of from 5 to 25, preferably from 8 to 16 microns;

e)a first adhesive layer AD1(5) on a polyurethane basis having at least one component with a thickness from 1 to 5gr/m²;

f) a polyethylenglycoltherephthalate film PET(6) having a thickness from 8 to 20 microns;

g) a second adhesive layer AD2(7) also on a two component polyurethane basis, which is able to absorb amide additives acting as slip agents, and has a thickness from 1 to 5gr/m²;

h) a coextruded film formed of ethylene copolymers PE(8) having a thickness of from 20 to 100 microns.

In an advantageous and therefore prefered embodiment (also because it is suitable for several uses and satisfies a large range of requirements) the layer thicknesses are preferably and critically: for a) of about 2gr/m²; for b) of about 3gr/m²; for c) of about 1gr/m²; for d) of about 12 microns; for e) of about 3gr/m²; for f) of about 12 microns; for g) of about 2-3gr/m²; and for h) of about 50 microns.

Preferably the coextruded film h) comprises a layer of ethylen-methacrylic acid copolymer (of the "surlin" type) and a layer of ethylen-vinylacetate copolymer, and other functional groups (of the Bynel CXA type).

An advantageous method to manufacture the above material comprises simply the three steps recited in claim 4.

The formed articles obtainable with the multilayer films according to the invention are numerous, among which we limit ourself to cite the closures, seals, covers, protections, overlayers, over-wrappings, dispensser, distributors etc. in particular the composite articles in which these films are coupled to supports (like cups, glasses containers etc. possibly also of small size), from at least a portion of which they can be disconnected or detached without difficulty and effort (f.i. by peeling) and/or from at least an other portion they can be very difficultly taken away.

The various aspects and advantages of the invention shall better appear from the description of the (not limitative) embodiments shown in the accompanyng drawings in which:

- fig. 1 is a schematic partially prospective front view, of a composite foil according to the invention;

- fig. 2 is a scheme of the manufacture method, and

- fig. 3A and 3B are partially prospective top views of an application example.

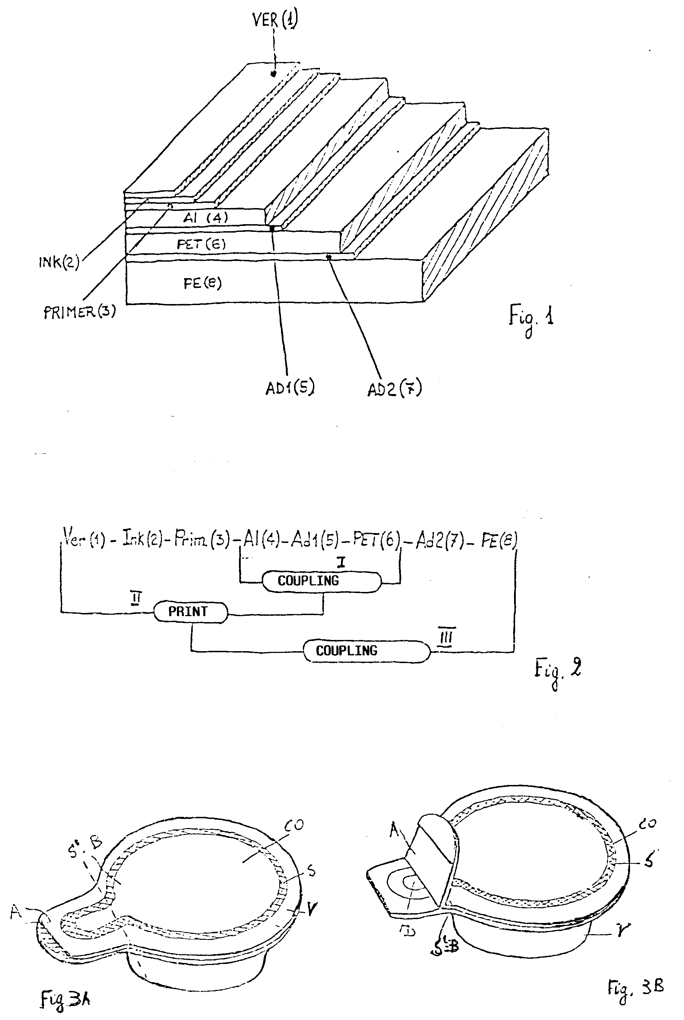

In fig.1, proceeding from the autside to the inside, the eight layers can be seen which have been above mentioned and are recited in claim 1. The preferred thicknesses are those indicated in claim 2.

The components for the above layers are generally those available on the market. However for the adhesive layers e) AD1(5) and g) AD2(7) special adhesives made by the Applicant and marked with the references P77 for AD1 and P78 and AD2 are preferably utilized.

As polyester film PET(6) a commercial film like DU PONT's 'Mylar" or ICI's "Melinex" can be used.

For the layer h) PE(8) a polyolefin based coextruded film is critically employed, more precisely a coextruded foil formed of a first film of ethylene (C2)-metacrylic acid copolymer (in an amount lower than 15%) f.i. DO PONT's "Surlin" and of a second film of ethylene-vinyl acetate copolymer (besides possible other functional groups) f.i. of DU PONT's Bynel CXA.

Fig.2 shows a scheme of an advantageous and thus preferred manufacturing method of the foil according to the invention, comprising: a step I of coupling of Al(4) and PET(6) also with the aid of adhesive AD1(5), a second step of printing; and a third step of coupling the foil coupled in I and printed in II with the support layer or film PE(8).

In figures 3A and 3B is shown one of the many applications of the foil of the invention: a container V of f.i. polystyrene, to be filled with milk, creams and the like (i.e. liquid and/or solid products) closed by a cover CO formed of the film of fig. 1 and fixed to the upper rims of V along a seam S with detachement resistance gradients. Indeed by controlling temperatures and/or pressure used for the connection of CO to V, a first zone A of the connection of CO to V is realized wherein CO can be detached by simply peeling CO from the upper rim of V until a hole or opening D of V is discovered, which allows a confortable and controllable exit of the content of V, the second zone B of CO being fixedly sealed to the rim of V and being practically undetachable. According to an advantageous feature of the invention, the first portion or zone of CO detached from V by simple peeling can be closed again under a light manual pressure and assures a good sealing even after several ouvertures and closures. In fig.3A the container V well closed and sealed by CO is shown; in fig. 3B the peelable portion B of CO has been easely raised and detached up to the seam S'.

**Claims**

1. Multilayer composite, substantially thermoplastic and thermosealable material, in particular multilayer film comprising at least a printed layer, a metallic layer, an intermediate layer, and a support layer, these layers being preferably coupled by means of adhesives, characterized in that, proceding from the outside to the inside, said material comprises:

   a) a layer of bright protective varnish VER-(1) on a polyester or polyurethanes basis, with two components and a thickness of from 0,5 to 5gr/m$^2$;

   b) a printing ink layer INK(2) on a nitrocellulose basis having a thickness increasing with the colour number increase from 2.5 to 7gr/m$^2$, preferably around 3gr/m$^2$ for a standard colours number;

   c) a layer of diluting, pigment free primer PRIMER(3) on a nitrocellulose basis with a thickness of from 0,5 to 1,5gr/m$^2$;

   d) an aluminum foil Al(4) with a thickness of from 5 to 25, preferably from 8 to 16 microns;

   e) a first adhesive layer AD1(5) on a polyurethane basis having at least one component with a thickness from 1 to 5gr/m$^2$;

   f) a polyethylenglycoltherephthalate film PET(6) having a thickness from 8 to 20 microns;

   g) a second adhesive layer AD2(7) also on a two component polyurethane basis, which is able to absorb amide additives acting as slip agents, and has a thickness from 1 to 5gr/m$^2$;

   h) a coextruded film formed of ethylene copolymers PE(8) having a thickness of from 20 to 100 microns.

2. Material according to claim 1, characterized in that the layer thicknesses are preferably and critically: for a) of about 2gr/m$^2$; for b) of about 3gr/m$^2$; for c) of about 1gr/m$^2$; for d) of about 12 microns; for e) of about 3gr/m$^2$; for f) of about 12 microns; for g) of about 2-3gr/m$^2$, and for h) of about 50 microns.

3. Material according to claim 1 or 2, characterized in that the coextruded film h) comprises a layer of ethylene-metacrylic acid copolymer (of the "Surlin" type) and a layer of ethylene-vynilacetate copolymer, and other functional groups (of the 'Binel CXA" type).

4. Method for the preparation of the material according to the above claims; substantially characterized in that it involves three steps:

   I) the alluminum foil d) is provided on one of its faces with adhesive layer e) and is coupled with the polyethylenglycoltherephthalate film f);

   II) the alluminum sheet is provided on its other face with the primer c), the ink layer b) and the varnish layer a) and is printed;
III) on the free face, opposite to the printing layer, of the composite, so printed film, the adhesive layer g) is applied and is coupled with the coextruded polyethylene-based film h).

5. Formed articles, in particular closures, seals, covers, protections, dispensers and the like, obtained with the material according to claims 1-3.

6. Formed articles substantially according to claims 5, fixed to supports with detachement resistance gradients.

7. Formed articled according to claim 6, sealed nearly irremovably on support portions and contemporaneously peelable from other zones of said supports.

Fig. 1

Fig. 2

Fig 3A

Fig. 3B